(19) Europäisches Patentamt
European Patent Office
Office européen des brevets

(11) **EP 1 434 163 B1**

(12) **EUROPEAN PATENT SPECIFICATION**

(45) Date of publication and mention
of the grant of the patent:
**22.10.2008 Bulletin 2008/43**

(51) Int Cl.:
***G06K 9/00*** *(2006.01)*

(21) Application number: **03257672.0**

(22) Date of filing: **05.12.2003**

(54) **Apparatus and method for acquisition, validation and verification of biometric features**

Vorrichtung und Verfahren zur Erfassung, Validierung und Überprüfung biometrischer Merkmale

Appareil et procédé d'acquisition, validation et vérification de caractéristiques biométriques

(84) Designated Contracting States:
**DE FR GB**

(30) Priority: **26.12.2002 JP 2002378452**

(43) Date of publication of application:
**30.06.2004 Bulletin 2004/27**

(60) Divisional application:
**07022719.4 / 1 903 476**

(73) Proprietor: **KABUSHIKI KAISHA TOSHIBA
Tokyo (JP)**

(72) Inventor: **Yokoi, Kentaro,
I.P.D. Toshiba Corporation
Minato-ku
Tokyo (JP)**

(74) Representative: **Shindler, Nigel
Brookes Batchellor LLP
102-108 Clerkenwell Road
London EC1M 5SA (GB)**

(56) References cited:
**WO-A-00/43960         WO-A-01/24700
GB-A- 2 357 175         US-A- 4 827 527**

**Description**

BACKGROUND OF THE INVENTION

1. Field of the Invention

This invention relates to an individual recognizing apparatus to recognize whether a recognized person is the proper person by using biological information such as a face image of a recognized person as data for certifying and an individual recognizing method.

2. Description of the Related Art

Recently, an individual recognizing apparatus was developed and is used in the management of the entry/exit to/from buildings/rooms requiring security for certifying whether a recognized person is the proper person using a face image, finger print, retina, iris, palm figure, etc. of the recognized person.

Such the individual recognizing apparatus is normally provided with a dictionary storing unit storing dictionaries for use in the individual certification. The individual certification is executed to certify whether a recognized person is the proper person using dictionaries stored in this dictionary storing unit and input certifying data (biological information of a recognized person).

By the way, certifying dictionaries are stored (hereinafter, called also as registered) in the dictionary storing unit and certifying data including various kinds of variations are acquired when a dictionary is stored. For this reason, a recognized person is urged to add various kinds of variations through the user interface.

Further, for instance, when failed to recognize (collate) a person, a certifying dictionary is updated by recognizing a person.

As described above, it was so far tried to acquire versatile certifying data (a face image) of a recognized person through the guidance to the recognized person. However, a recognized person may not act as provided in the guidance.

Further, it was so far supposed that if an improper dictionary was registered for recognition (collation), it is updated to a proper dictionary through re-registration or updating of the dictionary. However, a recognized person may not always re-register or update a dictionary.

GB-A-2357175 discloses a user authentication apparatus which permits substitute authentication when the quality of a fingerprint image is insufficient or when user verification (e.g. entering a PIN) fails. Images may be stored so that unauthorised users can be pursued.

WO-A-0043960 discloses a fraud prevention system in which personal biological data is compared with reference data and the person being identified is required to perform movement so as to establish that they are a living person and not an imitation of any kind.

SUMMARY OF THE INVENTION

It is an object of this invention to provide an individual recognizing apparatus and an individual recognizing method capable of using certifying data suited for the recognition for the learning when storing a dictionary and preventing an improper dictionary storage.

According to this invention, there is provided an individual recognizing apparatus comprising: a data acquisition unit to acquire a plurality of certifying image data from a face region of a recognized person; a detection unit to detect feature points from the plurality of certifying image data of such face regions as eyes, brows, nose or lips of the recognized person acquired by the data acquisition unit; a change calculation unit to calculate changes in detected positions of the feature points detected from the plurality of certifying data by the detection unit, the change calculation unit including a unit to calculate at least one of an up down and a left right angle change of the detected feature points; an aptitude judging unit to judge whether the certifying data acquired by the data acquisition unit is appropriate for the preparation of a certifying dictionary based on the change in the feature points calculated by the change calculation unit; a dictionary preparing unit to prepare a certifying dictionary based on the certifying data acquired by the data acquisition unit when the certifying data is judged appropriate; a dictionary storing unit to store the certifying dictionary prepared by the dictionary preparing unit; and a certifying unit to certify whether a recognized person is a proper person using the certifying data acquired by the data acquisition unit and the dictionary stored in the dictionary storing unit.

Further, according to this invention, there is provided an individual recognizing method comprising the steps of: acquiring a plurality of certifying data from a face region of a recognized person; detecting feature points of such face regions as eyes, brows, nose or lips of the recognized person from the acquired certifying data; calculating changes in detected positions of the feature points detected from the plurality of certifying image data, the calculation including calculating at least one of an up down and left right angle change of the detected feature points; judging whether the acquired certifying data is appropriate for the preparation of a certifying dictionary based on the change of the calculated feature points; preparing a certifying dictionary based on the acquired certifying data when the certifying data is judged appropriate in the judging step; storing the prepared certifying dictionary; and certifying whether a recognized person is a proper person using the acquired certifying data and the stored dictionary.

BRIEF DESCRIPTION OF THE DRAWINGS

Fig 1 is a block diagram schematically showing the construction of an individual recognizing apparatus involved in a first embodiment of this invention;

FIG. 2 is a flowchart for explaining the flow of the dictionary registration process of an individual recognizing apparatus involved in the first embodiment;

FIG. 3 is a block diagram schematically showing the construction of an individual recognizing apparatus involved in a second embodiment;

FIG. 4 is a flowchart for explaining the flow of the dictionary registration process of an individual recognizing apparatus in the second embodiment;

FIG. 5A and FIG. 5B are diagrams for explaining the state of detecting a change in the UP_DOWN angle in the individual recognizing apparatus in the second embodiment;

FIG. 6A and FIG. 6B are diagrams for explaining failed examples of detecting changes in the UP_DOWN angle in the individual recognizing apparatus in the second embodiment;

FIG. 7 is a top view of the head of a person viewed from the top for explaining the positional relation of feature points in the individual recognizing apparatus in the second embodiment;

FIG. 8A and FIG. 8B are diagrams for explaining changes in feature points resulting from the rotation in the individual recognizing apparatus in the second embodiment;

FIG. 9A and 9B are diagrams for explaining the state of detecting changes in the LEFT_RIGHT angle in the individual recognizing apparatus in the second embodiment;

FIG. 10 is a block diagram schematically showing the construction of the individual recognizing apparatus involved in a third embodiment;

FIG. 11 is a flowchart for explaining the flow of the dictionary registration process of the individual recognizing apparatus in the third embodiment; and

FIG. 12A to FIG. 12C are graphs for explaining an eigenvalue contribution rate in the individual recognizing apparatus in the third embodiment.

DETAILED DESCRIPTION OF THE INVENTION

Preferred embodiments of this invention will be described below referring to the attached drawings.

The first embodiment of this invention will be first explained referring to the drawings.

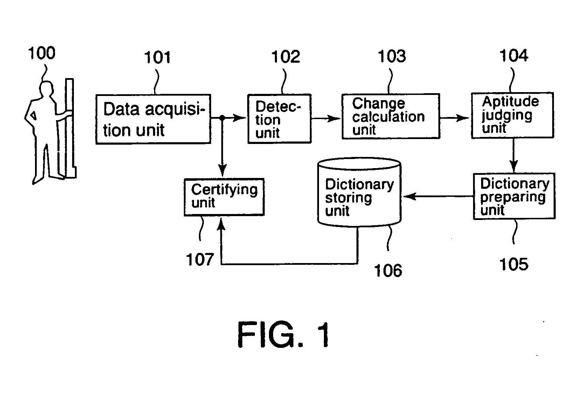

FIG. 1 schematically shows the construction of the individual recognizing apparatus involved in the first embodiment.

This individual recognizing apparatus comprises a data acquisition unit 101, a detection unit 102, a change calculation unit 103, an aptitude judging unit 104, a dictionary preparing unit 105, a dictionary storing unit 106, and a certifying unit 107.

The data acquisition unit 101 acquires biological information and other certifying data from a recognized person 100.

The detection unit 102 detects feature points from the certifying data acquired by the data acquisition unit 101.

The change calculation unit 103 calculates a change of detecting position of the feature point detected by the detection unit 102.

The aptitude judging unit 104 judges whether the certifying data acquired by the data acquisition unit 101 is appropriate for preparing a certifying dictionary based on the change of feature point calculated by the change calculation unit 103.

The dictionary preparing unit 105 prepares a dictionary for certifying based on the certifying data acquired by the data acquisition unit 101 when the certifying data acquired by the data acquisition unit 105 is judged appropriate.

The dictionary storing unit 106 stores a certifying dictionary prepared by the dictionary preparing unit 105.

The certifying unit 107 certifies whether a recognized person is the proper person using the certifying data acquired by the data acquisition unit 101 and the dictionary stored in the dictionary storing unit 106.

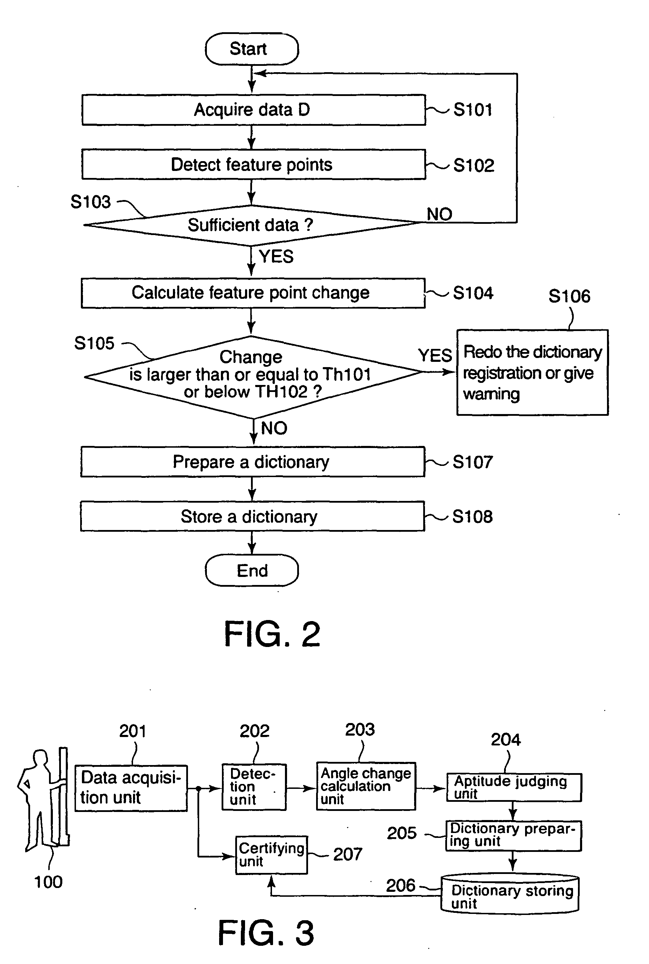

Hereinafter, the flow of the dictionary registration process in the first embodiment will be explained referring to the flowchart shown in FIG. 2.

First, a certifying data D is acquired from a recognized person 100 by the data acquisition unit 101 (Step S101). This certifying data D is, for instance, a face image data in the face certification, a fingerprint data in the fingerprint data, a voiceprint data in the voiceprint certification, and a sign data in the signature certification.

Then, feature points are detected from these certifying data D in the detection unit 102. The feature points referred to here are, for instance, such regions as eyes, brows, nose, lip, an edge, wrinkles in the face image data. In the fingerprint data, the feature points are minutiae (the edge, a branched finger pattern, etc.). In the signature data, the ending and leaping units are feature points. To detect these feature points, for instance, the detecting technique described in a publicly known literature [1] ("Extraction of Face Characteristics by Combination of Shape Extraction and Pattern Collation", Kazuhiro FUKUI and Osamu YAMAGUCHI, The Institute Electronics, Information and Communication Engineers Paper D-11, Vol. J82-D-11, No. 8, pp. 2170-2177, August 1997) is applicable as a method for extracting a face image.

Further, in this example, eyes and nose are detected as the feature points even when the certifying data D is a face image data.

The processes in Steps S101 and S102 are repeated until a sufficient amount of data is obtained (Step S103). The sufficient amount of data referred to here is about 50 to 100 sheets of face image data assuming that 5 sheets of face images per second are obtained.

When the sufficient volume of data is obtained, the change calculation unit 103 calculates changing positions of the feature points (eyes and nose) detected in Step S102 (S104). For instance, when assuming that a-pieces of feature points $f_{j,i}$ (j=1,2,...,a) were detected from n-pieces of data Di (i=1, 2, ..., k,...,n). At this time, if an average position of one feature point at j-th is $f_{j,center}$, "Change" that is the position change can be calculated as shown by, for instance, the following mathematical expression 1.

## [Mathematical Expression 1]

$$Change = \sum_{j=1}^{a} Change(j)$$

$$Change(j) = \sum_{i=1}^{n} \left| f_{j,i} - f_{j,center} \right|^2$$

Further, the change may be calculated according to the following mathematical expression [2] regarding it not the shift from the mean position but a total moving volume from the position of the preceding feature point:

## [Mathematical Expression 2]

$$Change(j) = \sum_{i=1}^{n-1} \left| f_{j,i} - f_{j,i+1} \right|$$

Or may be calculated as shown by the following mathematical expression 3 based on the change in a distance between feature points not the position of feature point.

$$Change = \sum_{j=1}^{a} \sum_{i=1}^{n} Change(j,i)$$

$$Change(j,i) = \sum_{k=1(k \neq i)}^{n} \left| f_{j,i} - f_{j,k} \right|^2$$

Then, the aptitude judging unit 104 judges whether the certifying data acquired by the data acquisition unit 101 is appropriate for the preparation of a certifying dictionary (Step S105). For instance, when the position change is above a prescribed threshold value TH101 or below TH102, it is too large (above TH101) or too small (below TH101) and the data is judged inaptitude for the dictionary registration and the registration is made over or a recognized person 101 is so warned and asked to select to make the registration (Step S106).

When the acquired certifying data is judged appropriate for the preparation of a certifying dictionary in Step S105, the dictionary preparing unit 105 prepares a certifying dictionary based on the certifying data acquired by the data acquisition unit 101 (Step S107). Then, the dictionary storing unit 106 stores the prepared dictionary (Step S108).

When learning a dictionary, it is necessary to learn data having somewhat diversity. Therefore, if no sufficient motion was observed or excessive motions were observed inversely when motions of a face were detected according to the eye and nose detecting positions as described above, a process is executed to exclude such data from the learning data. Thus, it becomes possible to prevent the inaptitude dictionary learning by data having no sufficient change or data having too large change.

The inaptitude dictionary leaning is such that there is less variation or data is excessively far from threshold values.

Next, the second embodiment will be explained.

FIG. 3 schematically shows the construction of the individual recognizing apparatus in the second embodiment. This individual recognizing apparatus comprises a data acquisition unit 201, a detection unit 202, an angle change calculation unit 203, an aptitude judging unit 204, a dictionary preparing unit 205, a dictionary storing unit 206, and a certifying unit 207.

The data acquisition unit 201 acquires biological information and other certifying data from a recognized person.

The detection unit 202 detects feature points from the certifying data acquired by the data acquisition unit 201.

The angle change calculation unit 203 calculates either one of the up_down, and the left_right feature points detected by the detection unit 202; in this case, the up_down and left_right angle changes.

The aptitude judging unit 204 judges whether certifying data acquired by the data acquisition unit 201 is appropriate for the preparation of a certifying dictionary based on he angle changes calculated by the angle change calculation unit 203.

The dictionary preparing unit 205 prepares a certifying data based on the certifying data acquired by the data acquisition unit 201 when the data is judged appropriate by the aptitude judging unit 204.

The dictionary storing unit 206 stores a certifying dictionary prepared by the dictionary preparing unit 205.

The certifying unit 207 certifies whether a recognized person 100 is the proper person using the certifying data acquired by the data acquisition unit 201 and dictionaries stored in the dictionary storing unit 206.

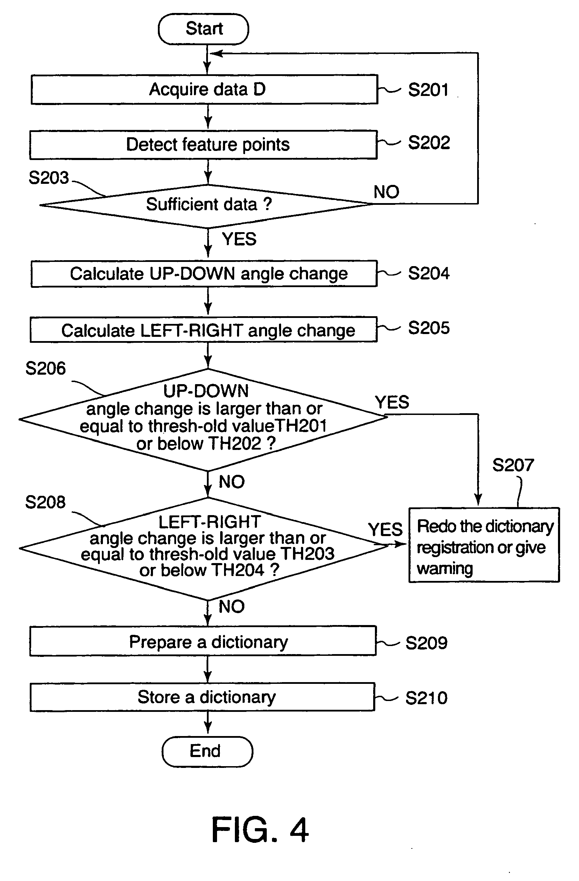

Hereinafter, the flow of the dictionary registration process involved in the second embodiment will be explained referring to the flowchart shown in FIG. 4.

First, the processes to acquire certifying data D from a recognized person 100 by the data acquisition unit 201 (Step S201) and to detect feature points by the detection unit 202 (Step S203) are the same as the processes in Steps S101 to S103 in the first embodiment described above until sufficient volume of data is obtained (Step S203).

When a-pieces feature points $f_{j,\,i}$ (j = 1, 2, ..., n) are detected from n-pieces data Di (i = 1, 2, ..., n) likewise the first embodiment, the angle change calculation unit 203 calculates first the up_down angle change as described below (Step S204). When certifying data D that is a face image data is taken here as an example of the positional information of feature points, the left eye coordinates ($X_{left\_eye}$, $Y_{left\_eye}$), the right eye coordinates ($X_{right\_eye}$, $Y_{right\_eye}$), the left naris coordinates ($X_{left\_nose}$, $Y_{left\_nose}$) and the right naris coordinates ($X_{right\_nose}$, $Y_{right\_nose}$) are used, respectively. Even when the feature point is, for instance, the eye area, mouth or brow, the process is the same.

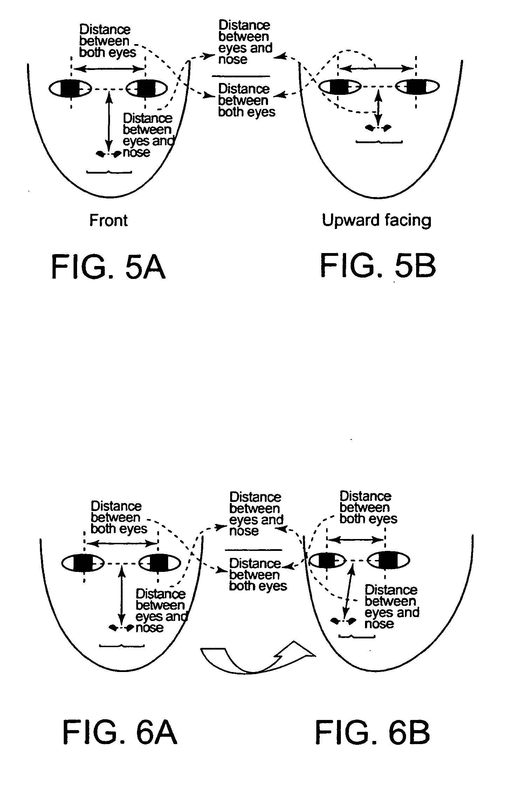

When the central coordinates of both eyes are ($X_{center\_eye}$, $Y_{center\_eye}$) and the central coordinates of both nares are ($X_{center\_nose}$, $Y_{center\_nose}$), the UP_DOWN index indicating the upper and lower angle change is obtained by the mathematical expression 4 shown below (See FIG. 5).

[Mathematical Expression 4]

Upper and lower angle change index UP_DOWN

$$= \frac{\text{Eye to Nose Distance}}{\text{Distance between Both Eyes}}$$

$$= \frac{\sqrt{(X_{center\_eye} - X_{center\_nose})^2 + (Y_{center\_eye} - Y_{center\_nose})^2}}{\sqrt{(X_{left\_eye} - X_{right\_eye})^2 + (Y_{left\_eye} - Y_{right\_eye})^2}}$$

As shown in FIG. 5A, when the face is faced to the front, the eye to nose distance (eye to nose distance) becomes large and the index becomes large. As shown in FIG. 5B, when the face is faced upward, the eye to nose distance becomes small and the index becomes small. So, in this example, the eye to nose distance is normalized by dividing it with the both eyes distance and even when the eye to nose distance becomes large or small by simply coming close to or away so that the eye to nose distance is not judged erroneously as an upper and lower angle change.

However, in this technique, even when the left and right angles only are changed as shown in FIG. 6B instead of the face facing the front as shown in FIG. 6A, the index UP_DOWN change may be erroneously judged as the change of the upper and lower angle. In this case, therefore, the correction may be made as shown below.

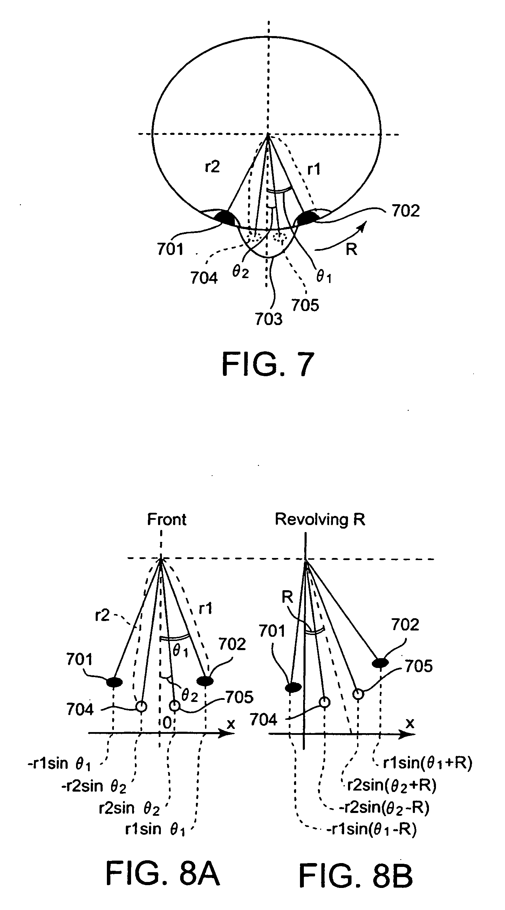

If the eyes 701 and 702 and the nose 703 (the nares 704 and 705) were positioned as shown by a model in FIG. 7, the positions of the feature points in the direction x are expressed as shown in FIG. 8A. Further, when the face is turned from the front side by R, it is expressed as shown in FIG. 8B. Accordingly, the distance between both eyes $L_{eye,0}$ in the direction x at the front side is expressed by the following expression:

[Mathematical Expression 5]

$$L_{eye,0} = 2rl\sin\theta_1$$

and the distance between both eyes $L_{eye,R}$ in the direction x when turned by R is expressed by the following expression:

[Mathematical Expression 6]

$$L_{eye,R} = rl\sin(\theta_1 + R) + rl\sin(\theta_1 - R)$$

and the shift of the central point between the eye and the nose $L_{shift,R}$ in the direction x when turned by R is expressed by the following expression:

[Mathematical Expression 7]

$$L_{shift,R} = \text{Position of Central Point of Naris in Direction x } -$$

$$\text{Position of Central Point of Eye in Direction x}$$

$$= \frac{r2\sin(\theta_2 + R) - r2\sin(\theta_2 - R)}{2} - \frac{rl\sin(\theta_1 + R) - rl\sin(\theta_1 - R)}{2}$$

Further, r1, r2, R, θ 1 and θ 2 are defined as shown below (see FIGS. 8A and 8B).

r1: A distance from the central point of the head to the left eye 702;
r2: A distance from the central point of the head to the right naris 704;
R: An angle turned the face from the front to left or right;
θ 1: An angle formed between the line connecting the front from the central point of the head and the line connecting the left eye 702 from the center of the head; and
θ 2: An angle formed between the line connecting the front from the central point of the head to the front and the line connecting the left naris 705 from the center of the head.

On the other hand, an apparent distance on an image changes according to a distance between the face of a recognized person 100 and a camera that is used as the data acquiring unit 201 and an apparent distance is generally in proportion to an actual distance. In other words, the apparent distances on an image in Numeral Formulas 5, 6 and 7 become as shown below respectively:

[Mathematical Expression 8]

$$L'_{eye,0} = a \cdot L_{eye,0}$$

[Mathematical Expression 9]

$$L'_{eye,R} = a \cdot L_{eye,R}$$

[Mathematical Expression 10]

$$L'_{shift,R} = a \cdot L_{shift,R} \quad (a \text{ is a proportionality constant})$$

Accordingly, from Mathematical Expressions 9 and 10,

[Mathematical Expression 11]

$$a = \frac{L'_{eye,R}}{L_{eye,R}} = \frac{L'_{shift,R}}{L_{shift,R}}$$

[Mathematical Expression 12]

$$\frac{L'_{eye,R}}{L'_{shift,R}} = \frac{L_{eye,R}}{L_{shift,R}}$$

are obtained. The left side of Mathematical Expression 12 is obtained from an observed value on an image and a parameter R is determined by substituting Mathematical Expressions 6 and 7 into the right side. Thus, $L_{eye,R}$ is obtained from Mathematical Expression 6 and a is obtained by substituting it into Mathematical Expression 11. Finally, the distance $L'_{eye,0}$ (a corrected vale of the distance between both eyes in Mathematical Expression 4) on an image of both eyes distance in the direction x at the front is estimated when a is substituted into Mathematical Expression 8.

Thus, it becomes possible to calculate the upper and lower angle change index UP_DOWN of Mathematical Expression 4 without causing a trouble from such a change in both eye distance as shown in FIG. 6B. Further, as the model shown in FIG. 7, a model may be used commonly to all persons or a model different for each type of face structure of a recognized person 100 can be used.

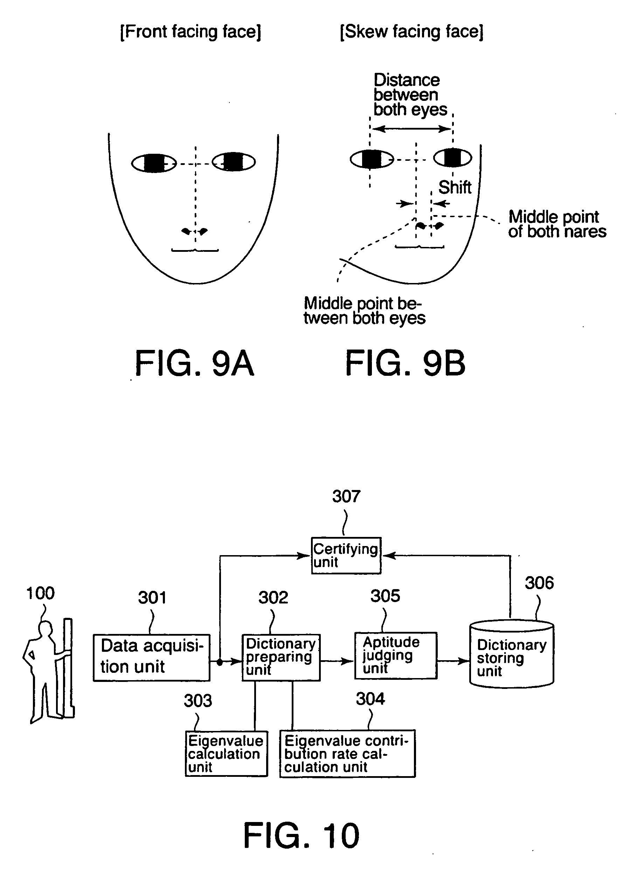

Then, the angle change calculation unit 203 calculates the index LEFT_RIGHT that shows a left and right angle change according to the following Mathematical Expression 13 (refer to Step S205, FIG. 9).

[Mathematical Expression 13]

Left and Right Change Index LEFT_RIGHT

= Shift between Central Point of Both Eyes and Central Point between Both Nares / Distance between Both Eyes

$$= -\frac{X_{center\_eye} - X_{center\_nose}}{\sqrt{(X_{center\_eye} - X_{center\_nose})^2 + (Y_{center\_eye} - Y_{center\_nose})^2}}$$

Here, for the distance between both eyes, the both eyes distance used in Step S204 may be corrected.

Based on the results obtained in the above, the aptitude judging unit 204 judges whether the certifying data acquired by the data acquisition unit 201 has sufficient angle changes (Steps S206 and S208). When, for instance, the upper and lower angle change index UP_DOWN is above the prescribed threshold value TH201, it is judged too large and the dictionary registration is made over or a recognized person 100 is so warned and have select whether to make the registration (Step S207).

When the upper and lower angle change index UP_DOWN is below the prescribed threshold value TH202, the upper and lower angle change is judged too small or when the left and right angle change index LEFT_RIGHT is above the prescribed threshold value TH203, the left and right angle change is judged too large, and when the left and right angle change index LEFT_RIGHT is below the prescribed threshold value TH204, the left and right angle change is judged too small and the process shown in Step S207 is executed.

When the certifying data were not judged as inaptitude in Steps S206 and S208 (when the acquired certifying data was judged to have a sufficient angle change), a certifying dictionary is prepared based on the certifying data acquired by the data acquisition unit 201 (Step S209). Then, the prepared dictionary is stored in the dictionary storing unit 206 (Step S210).

When learning dictionaries, it is necessary to make the learning using data having a certain variety and therefore, the vertical and lateral directions of a face are judged based on the positions of the eyes and the nose as described above. If there are less changes in the direction or inversely too many changes, it is possible to prevent an inaptitude learning of dictionaries using data not having sufficient angle changes or data having large angle changes by executing the process to exclude such data from the learning data.

Next, the third embodiment will be explained.

FIG. 10 is a diagram schematically showing the construction of the individual recognizing apparatus involved in the third embodiment. This individual recognizing apparatus comprises a data acquisition unit 301, a dictionary preparing unit 302, an eigenvalue calculation unit 303, an eigenvalue contribution rate calculation unit 304, an aptitude judging unit 305, a dictionary storing unit 396, and a certifying unit 307.

The data acquisition unit 301 acquires certifying data including biological information from a recognized person 100.

The dictionary preparing unit 302 prepares a certifying dictionary by executing a principal component analysis based on the certifying data acquired by the data acquisition unit 301.

The eigenvalue calculation unit 303 calculates an eigenvalue included in the dictionary preparing unit 302.

The eigenvalue contribution rate calculation unit 304 calculates an eigenvalue contribution rate of the dictionary prepared by the dictionary preparing unit 302.

The aptitude judging unit 305 judges whether the dictionary prepared by the dictionary preparing unit 302 is aptitude as a certifying dictionary based on the eigenvalue contribution rate calculated by the eigenvalue contribution rate calculation unit 304.

The dictionary storing unit 306 stores a dictionary prepared by the dictionary preparing unit 302 when it is judged aptitude by the aptitude judging unit 305.

The certifying unit 307 certifies whether a recognized person 100 is the person himself (or herself) using the certifying data acquired by the data acquisition unit 301 and the dictionary stored in the dictionary storing unit 306.

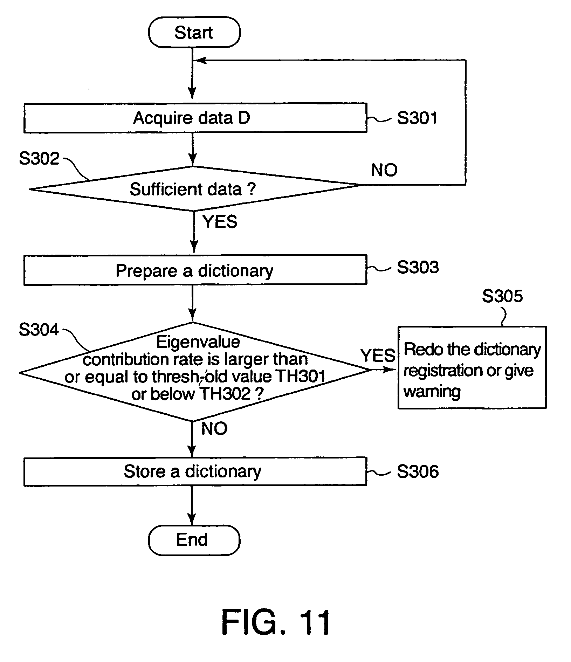

The flow of the dictionary registration process in the third embodiment will be explained below referring to the flowchart shown in FIG. 11.

First, the process to acquire certifying data D from a recognized person 100 (Step S301) is repeated in the data acquiring unit 301 until sufficient volume of data is acquired (Step S302). When sufficient volume of data is acquired, the dictionary preparing unit 302 and the eigenvalue calculation unit 303 prepare a certifying dictionary by analyzing principal components based on the acquired certifying data.

Definitely, the processes shown below are executed. For details, refer to the publicly known literature [2] ("Recognition of Face by Computer - Survey", Shigeru AKAMATSU, Institute Electronics Information and Communication Engineers Paper D-11, Vol. J80-d-11, No. 8, pp. 2031-2046, 1997).

M pieces patterns that are expressed by N dimensional vectors are $x_i$ (i=1, 2, ..., M) and a mean vector of them is $\mu$ , a variance-covariance matrix S is expressed by

**[Mathematical Expression 14]**

$$S = \frac{1}{M} \sum_{i=1}^{M} (x_i - \mu)(x_i - \mu)^T$$

S0, by solving a feature equation shown below

**[Mathematical Expression 15]**

$$S\Phi_i = \lambda_i \Phi_i \quad (\lambda_1 \geq \lambda_2 \geq \ldots \geq \lambda_N)$$

$$\Phi_i^T \Phi_i = 1$$

N-pieces N-dimensional feature vector $?_i$ (i = 1, 2, ..., N) and corresponding N-pieces eigenvalues $\lambda_i$(i = 1, 2, ..., N; $\lambda_1 > \lambda_2 > ... > \lambda_N$) are obtained. For solving the feature equation, an analytical library contained in the above-mentioned literature [1] is usable. Further, instead of using the variance-covariance matrix, a cross-correlation matrix R shown below is usable.

**[Mathematical Expression 16]**

$$R = \frac{1}{M} \sum_{i=1}^{M} x_i \bullet x_i^T$$

Then, the eigenvalue contribution rate calculation unit 304 calculates an eigenvalue contribution rate according to the following formula 17 (for details, refer to "Image Analyzing Handbook", Takagi and Shimoda, p. 43, Tokyo University Publishing Society, 1991). The symbol "T" represents a transposed matrix.

**[Mathematical Expression 17]**

**Eigenvalue contribution rate of m$^{th}$ eigenvalue**

$$C_m = \frac{\lambda_m}{\sum_{i=1}^{N} \lambda_i}$$

This eigenvalue shows the distribution of higher dimensional eigenvalue occupying a large part of the contribution rate (For details, refer to the publicly known literature [4] "Application of the Karhymen-Loeve Procedure for the Characterization of Human Faces".M. Kirby and L. Sirovich, IEEE Transactions on Patterns Analysis and Machine Intelligence, Vol. 12, No. 1, pp. 103, January 1990). This means that a large part of the distribution of the learning data can be expressed in higher dimensional feature vectors.

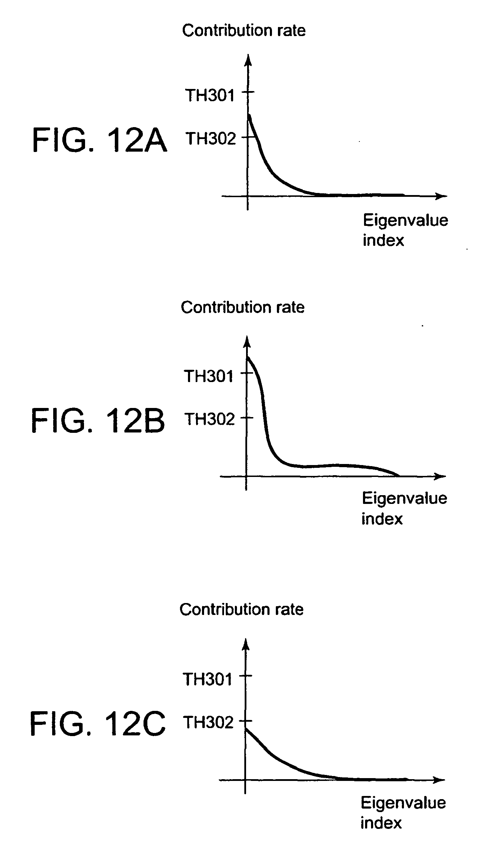

On the other hand, when the variety in the learning data is small (for instance, when a face is kept almost stationary), almost all of the eigenvalue contribution rate is occupied by very small higher dimensional eigenvalue only. On the contrary, when the variety of the learning data is too large (for instance, when a face is excessively moved or a detected face is shifted), a large eigenalue contribution rate is retained to lower dimensional eigenvalues as shown in FIG. 12C.

Accordingly, when an eigenvalue contribution rate of the m$^{th}$ eigenvalue or an accumulated eigenvalue contribution rate to the m-th eigenvalue shown in

$$[\text{Mathematical Expression 18}]$$

$$C_m = \sum_j^m c_j = \frac{\sum_j^m \lambda j}{\sum_{i=1}^N \lambda i}$$

is above the prescribed threshold value TH301, the aptitude judging unit 305 judges the variety as being too large and inaptitude as a dictionary for certification (collation) (Step S304), and the dictionary registration is made over or a recognized person 100 is so warned and have him (or her) to select whether to make the registration (Step S305). When a dictionary is judged aptitude in Step S304, the dictionary storing unit 306 stores that dictionary (Step S306).

As described above, when the face image change is too small, the eigenvalue contribution rate of a dictionary becomes large and on the contrary, when the change is too large, the eigenvalue contribution rate of a dictionary becomes small. Therefore, it is possible to prevent the inaptitude dictionary learning made by data that have no sufficient change or too large change by judging a face change.

Further, in the above-mentioned embodiments, the processes in the dictionary registration are explained, the similar process can be made in the certification (collation) after the dictionary registration.

According to this invention as described in detail in the above, an individual recognizing apparatus and an individual recognizing method capable of using certifying data suited for certifying in the dictionary registration for learning and preventing the inaptitude dictionary registration can be provided.

**Claims**

**1.** An individual recognizing apparatus comprising:

a data acquisition unit (101; 201) to acquire a plurality of certifying image data from a face region of a recognized person;
a detection unit (102; 202) to detect feature points from the plurality of certifying image data of such face regions as eyes (701; 702), brows, nose (703) or lips of the recognized person acquired by the data acquisition unit;
a change calculation unit (103; 203) to calculate changes in detected positions of the feature points detected from the plurality of certifying image data by the detection unit (202), the change calculation unit including a unit to calculate at least one of an up down and a left right angle change of the detected feature points;
an aptitude judging unit (104; 204) to judge whether the plurality of certifying image data acquired by the data acquisition unit are appropriate for the preparation of a certifying dictionary based on the change in the feature points calculated by the change calculation unit;
a dictionary preparing unit (105; 205) to prepare a certifying dictionary based on the certifying data acquired by the data acquisition unit when the certifying data is judged appropriate;
a dictionary storing unit (106; 206) to store the certifying dictionary prepared by the dictionary preparing unit; and
a certifying unit (107; 207) to certify whether a recognized person is a proper person using the certifying data acquired by the data acquisition unit and the dictionary stored in the dictionary storing unit.

**2.** An individual recognizing apparatus according to claim 1, wherein the aptitude judging unit restarts the recognizing process again starting from the acquisition of certifying data by the data acquisition unit, when the certifying data is judged as inappropriate by the aptitude judging unit.

**3.** An individual recognizing method comprising the steps of:

acquiring a plurality of certifying image data from a face region of a recognized person;
detecting feature points of such face regions as eyes (701; 702), brows, nose (703) or lips of the recognized person from the acquired certifying data;
calculating changes in detected positions of the feature points detected from the plurality of certifying image data the calculation including calculating at least one of an up down and left right angle change of the detected feature points;
judging whether the plurality of acquired certifying image data are appropriate for the preparation of a certifying dictionary based on the change of the calculated feature points;
preparing a certifying dictionary based on the acquired certifying data when the certifying data is judged appropriate in the judging step;
storing the prepared certifying dictionary; and
certifying whether a recognized person is a proper person using the acquired certifying data and the stored dictionary.

4. An individual recognizing method according to claim 3, wherein the processes are executed again starting from the acquisition of the certifying data by the data acquiring step when the acquired data is judged as inappropriate in the aptitude judging step.

**Patentansprüche**

1. Individuum-erkennende Vorrichtung, aufweisend:

eine Datenakquisitionseinheit (101; 201) zur Akquisition einer Mehrzahl von zertifizierenden Bilddaten aus einer Gesichtsregion einer erkannten Person;
eine Detektionseinheit (102, 202) zur Detektion von Merkmalspunkten aus der Mehrzahl zertifizierender Bilddaten von derartigen Gesichtsregionen wie Augen (701; 702), Brauen, Nase (703) oder Lippen der erkannten Person, die durch die Datenakquisitionseinheit akquiriert wurden;
eine Änderungsberechnungseinheit (103; 203) zur Berechnung von Änderungen in detektierten Positionen von Merkmalspunkten, die aus einer Mehrzahl von zertifizierenden Bilddaten durch die Detektionseinheit (202) detektiert wurden, wobei die Änderungsberechnungseinheit beinhaltet eine Einheit zur Berechnung von wenigstens einer oben unten und einer links rechts Winkeländerung der detektierten Merkmalspunkte;
eine Eignungsbeurteilungseinheit (104; 204) zur Beurteilung, ob die Mehrzahl der zertifizierenden Bilddaten, die durch die Datenakquisitionseinheit akquiriert wurden, geeignet sind zur Vorbereitung eines zertifizierenden Verzeichnisses, basierend auf der Änderung in den Merkmalspunkten, die durch die Änderungsberechnungseinheit berechnet wurden;
eine verzeichnisvorbereitungseinheit (105; 205) zur Vorbereitung eines zertifizierenden Verzeichnisses, basierend auf den zertifizierenden Daten, die durch die Datenakquisitionseinheit akquiriert wurden, wenn die zertifizierenden Daten als geeignet beurteilt worden sind;
eine Verzeichnisspeicherungseinheit (106; 206) zur Speicherung des zertifizierenden Verzeichnisses, das durch die Verzeichnisvorbereitungseinheit vorbereitet wurde; und
eine zertifizierende Einheit (107; 207) zur Zertifizierung, ob eine erkannte Person eine passende Person ist, verwendend die durch die Datenakquisitionseinheit akquirierten zertifizierenden Daten und das in der Verzeichnisspeicherungseinheit gespeicherte Verzeichnis.

2. Individuum-erkennende Vorrichtung nach Anspruch 1, wobei die Eignungsbeurteilungseinheit den Erkennungsprozess erneut startet, beginnend mit der Akquisition der zertifizierenden Daten durch die Datenakquisitionseinheit, wenn die zertifizierenden Daten durch die Eignungsbeurteilungseinheit als ungeeignet beurteilt wurden.

3. Individuum-erkennendes Verfahren, das folgende Schritte aufweist:

Akquirieren einer Mehrzahl von zertifizierenden Bilddaten aus einer Gesichtsregion einer erkannten Person;
Detektieren von Merkmalspunkten derartiger Gesichtsregionen wie Augen (701; 702), Brauen, Nase (703) oder Lippen der erkannten Person aus den akquirierten zertifizierenden Daten;
Berechnen von Änderungen in detektierten Positionen von Merkmalspunkten, die aus einer Mehrzahl von zertifizierenden Bilddaten detektiert wurden, wobei die Berechnung beinhaltet eine Berechnung wenigstens einer oben unten und links rechts Winkeländerung der detektierten Merkmalspunkte;
Beurteilen, ob die Mehrzahl der akquirierten zertifizierenden Bilddaten geeignet ist für die Vorbereitung eines zertifizierenden Verzeichnisses, basierend auf der Änderung der berechneten Merkmalspunkte;
Vorbereiten eines zertifizierenden Verzeichnisses, basierend auf den akquirierten zertifizierenden Daten, wenn die zertifizierenden Daten im Beurteilungsschritt als geeignet beurteilt wurden;
Speichern des zertifizierenden Verzeichnisses; und Zertifizieren, ob eine erkannte Person eine passende Person ist, verwendend die akquirierten zertifizierenden Daten und das gespeicherte Verzeichnis.

4.  Individuum-erkennendes Verfahren nach Anspruch 3, wobei die Prozesse erneut ausgeführt werden, beginnend mit der Akquisition der zertifizierenden Daten durch den Datenakquirierungsschritt, wenn die akquirierten Daten im Eignungsbeurteilungsschritt als ungeeignet beurteilt wurden.

**Revendications**

1.  Dispositif de reconnaissance d'un individu comportant :

    une unité ( 101 ; 201 ) d'acquisition de données destinée à acquérir une pluralité de données d'images de certification à partir d'une région de face d'une personne reconnue ;
    une unité ( 102 ; 202 ) de détection destinée à détecter des points caractéristiques de la pluralité de données d'images de certification de régions de face telles que les yeux ( 701 ; 702 ), les sourcils, le nez ( 703 ) ou les lèvres de la personne reconnue acquises par l'unité d'acquisition de données ;
    une unité ( 103 ; 203 ) de calcul de modification destinée à calculer des modifications dans des positions détectées des points caractéristiques détectés par l'unité ( 202 ) de détection de la pluralité de données d'images de certification, l'unité de calcul de modification comportant une unité pour calculer au moins l'un d'un changement vers le bas ou vers le haut et d'un changement d'angle vers la droite ou vers la gauche des points caractéristiques détectés ;
    une unité ( 104 ; 204 ) de jugement d'aptitude destinée à juger si la pluralité de données d'images de certification acquises par l'unité d'acquisition de données sont appropriées pour la préparation d'un dictionnaire de certification fondé sur la modification des points caractéristiques calculée par l'unité de calcul de modification ;
    une unité ( 105 ; 205 ) de préparation de dictionnaire destinée à préparer un dictionnaire de certification fondé sur les données de certification acquises par l'unité d'acquisition de données lorsque les données de certification sont jugées appropriées ;
    une unité ( 106 ; 206 ) de mémorisation du dictionnaire destinée à mémoriser le dictionnaire de certification préparé par l'unité de préparation de dictionnaire ; et
    une unité ( 107 ; 207 ) de certification destinée à certifier si une personne reconnue est une bonne personne en utilisant les données de certification acquises par l'unité d'acquisition de données et le dictionnaire mémorisé dans l'unité de mémorisation de dictionnaire.

2.  Dispositif de reconnaissance d'un individu suivant la revendication 1, dans lequel l'unité de jugement d'aptitude recommence le processus de reconnaissance de nouveau en commençant à partir de l'acquisition de données de certification par l'unité d'acquisition de données, lorsque les données de certification sont jugées comme n'étant pas appropriées par l'unité de jugement d'aptitude.

3.  Procédé de reconnaissance d'un individu comportant les étapes dans lesquelles :

    on acquiert une pluralité de données d'images de certification à partir d'une région de face d'une personne reconnue ;
    on détecte des points caractéristiques de régions de face telles que les yeux ( 701 ; 702 ), les sourcils, le nez ( 703 ) ou les lèvres de la personne reconnue à partir des données de certification acquises ;
    on calcule des modifications dans des positions détectées des points caractéristiques détectés à partir de la pluralité de données d'images de certification, le calcul comportant l'étape dans laquelle on calcule au moins l'une d'une modification vers le haut ou vers le bas et d'une modification d'un angle vers la gauche ou vers la droite des points caractéristiques détectés ;
    on juge si la pluralité dé données d'images de certification acquises sont appropriées pour la préparation d'un dictionnaire de certification fondé sur la modification des points caractéristiques calculés ;
    on prépare un dictionnaire de certification fondé sur les données de certification acquises lorsque les données de certification sont jugées appropriées à l'étape de jugement ;
    on mémorise le dictionnaire de certification préparé ; et
    on certifie si une personne reconnue est une bonne personne en utilisant les données de certification acquises et le dictionnaire mémorisé.

4. Procédé de reconnaissance d'un individu suivant la revendication 3, dans lequel les processus sont exécutés de nouveau en commençant à partir de l'acquisition des données de certification par l'étape d'acquisition de données lorsque les données acquises sont jugées comme n'étant pas appropriées lors de l'étape de jugement d'aptitude.

100  101  102  103  104

Data acquisi-tion unit

Detec-tion unit

Change calculation unit

Aptitude judging unit

Certifying unit

Dictionary storing unit

Dictionary preparing unit

107  106  105

FIG. 1

Start

Acquire data D — S101

Detect feature points — S102

S103 — Sufficient data ? — NO

YES

Calculate feature point change — S104

S105 — Change is larger than or equal to Th101 or below TH102 ? — YES — S106 Redo the dictionary registration or give warning

NO

Prepare a dictionary — S107

Store a dictionary — S108

End

# FIG. 2

201 Data acquisition unit

202 Detection unit

203 Angle change calculation unit

204 Aptitude judging unit

205 Dictionary preparing unit

206 Dictionary storing unit

207 Certifying unit

100

# FIG. 3

```
                    ┌──────────┐
                    │  Start   │
                    └────┬─────┘
                         │←──────────────────────────┐
         ┌───────────────▼───────────────┐           │
         │        Acquire data D         ├── S201     │
         └───────────────┬───────────────┘           │
                         │                            │
         ┌───────────────▼───────────────┐           │
         │      Detect feature points    ├── S202     │
         └───────────────┬───────────────┘           │
 S203                    │                            │
         ╱───────────────▼───────────────╲    NO      │
        ◄        Sufficient data ?         ►──────────┘
         ╲───────────────┬───────────────╱
                         │ YES
         ┌───────────────▼───────────────┐
         │  Calculate UP-DOWN angle change ├── S204
         └───────────────┬───────────────┘
                         │
         ┌───────────────▼───────────────┐
         │ Calculate LEFT-RIGHT angle change ├── S205
         └───────────────┬───────────────┘
 S206                    │
         ╱───────────────▼───────────────╲
        ╱          UP-DOWN                 ╲    YES
        ◄  angle change is larger than or   ►──────┐
        ╲  equal to thresh-old valueTH201  ╱       │
         ╲      or below TH202 ?          ╱        │
          ╲─────────────┬───────────────╱         │ S207
                        │ NO                       │
 S208                   │                          │
         ╱──────────────▼───────────────╲    YES  ┌─▼──────────────────┐
        ╱        LEFT-RIGHT               ╲        │ Redo the dictionary │
        ◄  angle change is larger than or  ►──────►│ registration or give│
        ╲  equal to thresh-old value TH203╱        │ warning             │
         ╲     or below TH204 ?          ╱         └─────────────────────┘
          ╲────────────┬───────────────╱
                       │ NO
         ┌─────────────▼─────────────────┐
         │     Prepare a dictionary      ├── S209
         └─────────────┬─────────────────┘
                       │
         ┌─────────────▼─────────────────┐
         │      Store a dictionary       ├── S210
         └─────────────┬─────────────────┘
                       │
                 ┌─────▼─────┐
                 │    End    │
                 └───────────┘
```

# FIG. 4

16

Front

Upward facing

FIG. 5A          FIG. 5B

FIG. 6A          FIG. 6B

FIG. 7

FIG. 8A     FIG. 8B

[Front facing face]  [Skew facing face]

Distance between both eyes

Shift

Middle point of both nares

Middle point between both eyes

FIG. 9A  FIG. 9B

307 Certifying unit

100

301 Data acquisition unit

302 Dictionary preparing unit

305 Aptitude judging unit

306 Dictionary storing unit

303 Eigenvalue calculation unit

304 Eigenvalue contribution rate calculation unit

FIG. 10

FIG. 11

Contribution rate

TH301 —

FIG. 12A   TH302 —

Eigenvalue
index

Contribution rate

TH301 —

FIG. 12B   TH302 —

Eigenvalue
index

Contribution rate

TH301 —

FIG. 12C   TH302 —

Eigenvalue
index

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2357175 A

- WO 0043960 A

### Non-patent literature cited in the description

- **KAZUHIRO FUKUI ; OSAMU YAMAGUCHI.** Extraction of Face Characteristics by Combination of Shape Extraction and Pattern Collation. *The Institute Electronics, Information and Communication Engineers Paper D-11,* August 1997, vol. J82-D-11 (8), 2170-2177

- **SHIGERU AKAMATSU.** Recognition of Face by Computer - Survey. *Institute Electronics Information and Communication Engineers Paper D-11,* 1997, vol. J80-d-11 (8), 2031-2046
- **M. KIRBY ; L. SIROVICH.** Application of the Karhymen-Loeve Procedure for the Characterization of Human Faces. *IEEE Transactions on Patterns Analysis and Machine Intelligence,* January 1990, vol. 12 (1), 103